# EUROPÄISCHE PATENTSCHRIFT

(11) **EP 2 818 506 B1**
(45) Veröffentlichungstag und Bekanntmachung des Hinweises auf die Patenterteilung: **02.03.2016**
(21) Anmeldenummer: 13174015.1
(22) Anmeldetag: 27.06.2013
(51) Int. Cl.: C08L 15/02, B60C 29/02, F16K 15/20

(54) **Ventilkörper für ein Snap-In-Ventil und Snap-In-Ventil**
Valve body for a snap in valve and snap in valve
Corps de valve pour une valve snap-in et valve snap-in

(43) Veröffentlichungstag der Anmeldung: 31.12.2014
(73) Patentinhaber: Continental Automotive GmbH, 80506 München (DE)
(72) Erfinder: Recker, Carla, 30167 Hannover (DE); Lelièvre, Gwenn, 31500 Toulouse (FR); Härtel, Volker, 82110 Germering (DE); Efimov, Konstantin, 30167 Hannover (DE)

(56) Entgegenhaltungen:
- JP-A- 2012 091 568
- US-A- 2 752 981
- US-A- 6 163 255
- US-A1- 2004 084 124
- US-A1- 2008 314 488
- US-A1- 2010 024 539

## Beschreibung

Die Erfindung betrifft einen Ventilkörper für ein Snap-In-Ventil mit einem Ventilschaft mit Ventileinsatz und einem mit diesem verbundenen mantelartigen Körper aus einer Gummimischung. Die Erfindung betrifft ferner ein Snap-In-Ventil.

Übliche und gemäß dem Stand der Technik ausgeführte Ventile von Fahrzeugrädern, welche aus einer Felge und einem Fahrzeugluftreifen bestehen, sind beispielsweise aus der EP 0 206 002 A2, der WO 2007/112920 A1, der WO 2009/0242220 A1, der WO 2010/075967 A1 und der EP 2 176 076 B1 bekannt. Die Ventilkörper dieser Ventile weisen mantelartige Körper auf, welche hauptsächlich aus Gummimischungen hergestellt werden, deren Kautschukkomponente aus NR/EPDM-Blends oder SBR/EPDM-Blends besteht. Die Gummikörper von Ventilen, die mit einem Gehäuse zur Aufnahme einer elektronischen Einheit versehen sind, wie sie beispielsweise aus der WO 2010/075967 A1 oder der EP 2 176 076 B1 bekannt sind, sind höheren Belastungen ausgesetzt. Die aus den üblichen Kautschukmischungen hergestellten Gummikörper weisen nicht die erwünschte Haltbarkeit auf, insbesondere sind sie hinsichtlich ihrer Wärmebeständigkeit, Rissbeständigkeit, Steifigkeit und Ozonbeständigkeit verbesserungswürdig.

Hier setzt nun die Erfindung ein, deren Aufgabe darin besteht, einen mantelartigen Körper für einen Ventilkörper zur Verfügung zu stellen, der die erwähnten Nachteile nicht aufweist.

Gelöst wird die gestellte Aufgabe erfindungsgemäß dadurch, dass der mantelartige Körper aus einer Gummimischung besteht, die Chloropren-Kautschuk enthält.

Mantelartige Körper, die aus einer Chloropren-Kautschuk enthaltenden Gummimischung hergestellt sind, zeichnen sich durch eine besonders gute Widerstandfähigkeit gegen Versprödung, Witterungseinflüsse, insbesondere Ozon, und gute Wärmebeständigkeit aus. Chloropren-Kautschuk lässt sich zudem gut mit anderen Polymeren zu Polymer-Blends verarbeiten, insbesondere mit Naturkautschuk (NR) oder Ethylen-Propylen-Dien-Kautschuk (EPDM), etwa zur Verbesserung der Tieftemperaturflexibilität, ferner auch mit Styrol-Butadien-Kautschuk (SBR) und anderen Kautschuken.

Für eine gute Widerstandfähigkeit gegen Versprödung und Witterungseinflüssen, insbesondere Ozon, sowie für eine gute Wärmebeständigkeit des mantelartigen Körpers sollte der Anteil an Chloropren-Kautschuk in der Gummimischung des mantelartigen Körpers zwischen 30 phr und 100 phr betragen, vorzugsweise mindestens 50 phr, insbesondere mindestens 75 phr.

Die Gummimischung des mantelartigen Körpers kann neben Chloropren-Kautschuk zumindest einen der Kautschuke aus der Gruppe der Dienkautschuke wie z.B. Naturkautschuk, Ethylen-Propylen-Dien-Kautschuk, Butadienkautschuk, Isoprenkautschuk und/oder Styrol-Butadien-Kautschuk enthalten, wobei die Kautschuke funktionalisiert sein können. Durch Beimischungen weiterer Kautschuktypen lassen sich bestimmte Eigenschaften des mantelartigen Körpers gezielt einstellen, beispielsweise die Haftungseigenschaften zum Ventilschaft mit Ventileinsatz oder die Flexibilität bzw. Steifigkeit.

Die Erfindung betrifft ferner ein Snap-In-Ventil für ein Fahrzeugrad aus Felge und Fahrzeugluftreifen, dessen Ventilkörper gemäß einem oder mehreren der Ansprüche 1 bis 4 ausgeführt ist.

Ein erfindungsgemäßes Snap-In-Ventil kann einen Ventilkörper aufweisen, der mit einem Elektronikgehäuse verbunden ist. Das Elektronikgehäuse kann vor oder nach der Montage mit dem Ventilkörper verbunden werden, die Verbindung kann ggf. auch wieder gelöst werden.

Gerade bei diesen Ventilen sind wegen der höheren mechanischen Belastungen erfindungsgemäße mantelartige Körper für die Ventilkörper besonders vorteilhaft.

Weitere Merkmale, Vorteile und Einzelheiten der Erfindung werden nun anhand der Zeichnung, die ein mögliches Ausführungsbeispiel darstellt, näher beschrieben. Dabei zeigen
Fig. 1 eine Schnittansicht eines Ventilkörpers eines beispielhaften Snap-In-Ventils und
Fig. 2 und 3 Diagramme, ermittelt mit Vulkanisatproben.

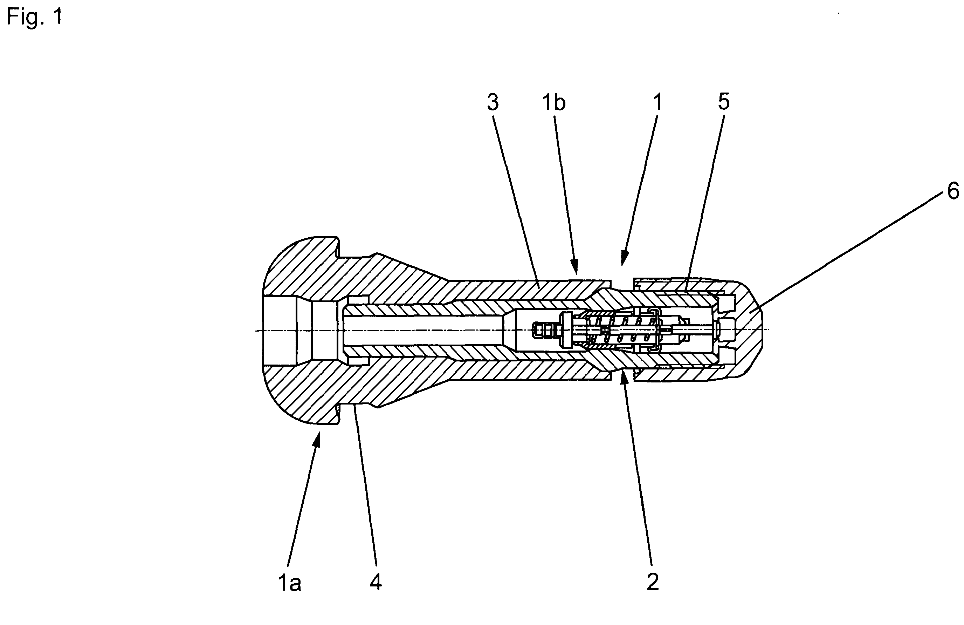

Fig. 1 zeigt eine Ansicht einer Ausführungsform eines üblichen Ventilkörpers 1 eines Ventils für ein Fahrzeugrad mit einer Felge und einem Luftreifen. Der Ventilkörper 1 besteht aus einem Ventilschaft mit Ventileinsatz 2, welcher gemäß dem Stand der Technik ausgeführt sein kann und außenseitig mit einem mantelartigen Gummikörper 3 fest verbunden ist, welcher beispielsweise haftend anvulkanisiert ist. Der Ventilkörper 1 durchsetzt im montierten Zustand eine Felgenbohrung der nicht gezeigten Felge und weist einen Ventilkörperabschnitt 1a auf, welcher bei montiertem Ventil ins Felgeninnere ragt, sowie einen Ventilkörperabschnitt 1b, welcher über die Felge hinaus nach außen ragt. Zwischen den Ventilkörperabschnitten 1a, 1b ist am Ventilkörper 1 eine Ringnut 4 ausgebildet, in welcher der Rand des bereits erwähnten Felgenloches sitzt. Der Ventilschaft mit Ventileinsatz 2 ist an seinem freien Endabschnitt mit einem Außengewinde 5 versehen, auf welches eine Ventilkappe 6 aufgeschraubt werden kann.

Gemäß der Erfindung ist der mantelartige Körper 3 aus einer Kautschukmischung hergestellt, die Chloropren-Kautschuk enthält. Der Anteil an Chloropren-Kautschuk in der Mischung beträgt mindestens 30 phr, insbesondere mindestens 50 phr und vorzugsweise zwischen 75 und 100 phr, wobei Chloropren-Kautschuk insbesondere in Kombination mit einem oder mehreren der Kautschuke Naturkautschuk, Ethylen-Propylen-Dien-Kautschuk (EPDM), Butadienkautschuk (BR), Isoprenkautschuk (IR) oder Styrol-Butadien-Kautschuk (SBR) verwendet werden kann. Die sonstigen Mischungsbestandteile der Kautschukmischung entsprechen den üblichen Mischungsbestandteilen für Kautschukmischungen auf Basis von Chloropren und übrigen Dienkautschuken für technische Gummiwaren oder Fahrzeugluftreifen, wie sie z. B. im Handbuch für die Gummi-Industrie, 2. Auflage (Hrsg. Bayer AG, 1991) beschrieben werden.

In der nachstehenden Tabelle 1 sind Mischungsbeispiele E₁ und E₂ von erfindungsgemäßen Kautschukmischungen und zwei Mischungsbeispiele St₁, St₂ für Kautschukmischungen nach dem Stand der Technik, jeweils Mischungen für mantelartige Körper 3 von Ventilkörpern 1, angegeben. Die Anteile der Mischungsbestandteile sind in phr angegeben und daher auf 100 Gewichtsteile Kautschuk in der jeweiligen Mischung bezogen.

**Tabelle 1**

| | E₁ | E₂ | St₁ | St₂ |
|---|---|---|---|---|
| Chloropren-Kautschuk | 100 | 100 | - | - |
| EPDM | - | - | 30 | 30 |
| Naturkautschuk | - | - | 70 | - |
| SBR 1500 | - | - | - | 70 |
| Ruß N220 | 35 | 47,5 | 68 | 66 |
| Silika | 5 | 5 | 8 | 8 |
| Mineralöl | - | 5 | 30 | 28 |
| Esterweichmacher | 10 | 10 | - | - |
| Beschleuniger | 2,4 | 2,4 | 2,9 | 3,6 |
| Schwefel | - | - | 0,9 | 0,6 |
| Zinkoxid | - | 5 | 5 | 4 |
| Verarbeitungshilfsmittel | 5 | 5 | 1,8 | 1,8 |
| Alterungsschutzmittel | 4,0 | 4,8 | 2,25 | 2,25 |

Erfindungsgemäße mantelartige Körper 3 von Ventilkörpern 1 weisen eine wesentlich höhere Haltbarkeit auf als die gemäß dem Stand der Technik hergestellten mantelartigen Körper von Ventilkörpern für Snap-In-Ventile, die in der Kautschukkomponente beispielsweise einen Blend aus NR/EPDM (Beispiel St₁) oder SBR/EPDM (Beispiel St₂) enthalten. Die signifikant bessere Haltbarkeit ist insbesondere auf die höhere Wärmebeständigkeit von Chloropren-Kautschuk zurückzuführen.

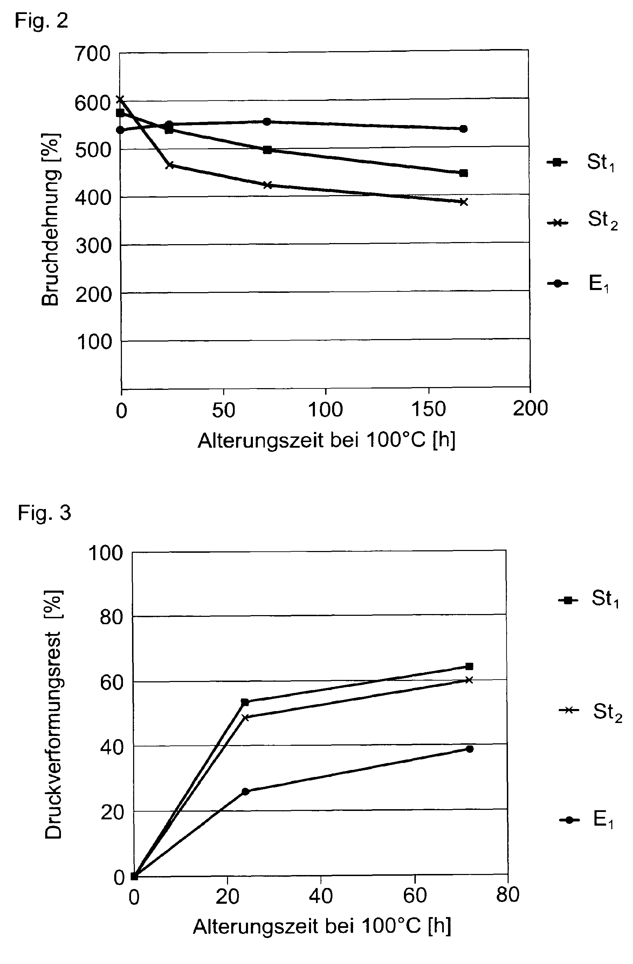

Aus der erfindungsgemäßen Kautschukmischung E₁ sowie aus den Kautschukmischungen St₁ und St₂ nach dem Stand der Technik wurden Vulkanisatproben angefertigt und gemäß DIN ISO 5725 (Fig. 2) und DIN ISO 815 (Fig. 3) hinsichtlich ihres Alterungsverhaltens geprüft. Im Diagramm in Fig. 2 ist die Bruchdehnung [%] gegenüber der Alterungszeit [h] bei 100 ° Celsius für die drei Vulkanisatproben aufgetragen. Das Vulkanisat aus der Chloropren-Kautschukmischung zeigt eine nahezu unverändert hohe Bruchdehnung über der Zeit, die Vulkanisate aus den Mischungen gemäß dem Stand der Technik schneiden deutlich schlechter ab. Im Diagramm in Fig. 3 ist der Druckverformungsrest [%] gegenüber der Alterungszeit [h] bei 100 ° Celsius aufgetragen. Gegenüber den Vulkanisaten aus den Kautschukmischungen gemäß dem Stand der Technik zeigt auch hier das Vulkanisat aus der erfindungsgemäßen Chloropren-Kautschukmischung ein deutlich besseres Resultat.

Ventilkörper mit gemäß der Erfindung aus einer Chloropren-Kautschukmischung hergestellten mantelartigen Körpern 3 können Ventilkörper für herkömmliche Snap-In-Ventile, aber auch Ventilkörper von Ventilen sein, die mit einem Elektronikgehäuse verbunden sind, welches im Felgeninneren positioniert ist, um insbesondere Elektronikbauteile aufzunehmen, die Betriebsparameter des Fahrzeugrades, beispielsweise den Reifeninnendruck, messen. Gerade diese Ventile sind höheren mechanischen Belastungen ausgesetzt und es hat sich herausgestellt, dass solche Ventile mit erfindungsgemäß ausgeführten Ventilkörpern diesen Belastungen besonders gut und dauerhaft standhalten.

### Bezugsziffern

- 1 .........: Ventilkörper
- 1a .......: Ventilkörperabschnitt
- 1b .......: Ventilkörperabschnitt
- 2 .........: Ventilschaft mit Ventileinsatz
- 3 .........: mantelartiger Körper
- 4 .........: Ringnut
- 5 .........: Außengewinde
- 6 .........: Ventilkappe

## Patentansprüche

1. Ventilkörper (1) für ein Snap-In-Ventil eines Fahrzeugrades mit einem Ventilkörper (1) mit einem Ventilschaft mit Ventileinsatz (2) und einem mit dem Ventilschaft mit Ventileinsatz (2) fest verbundenen mantelartigen Körper (3) aus einer Gummimischung,
**dadurch gekennzeichnet,**
**dass** der mantelartige Körper (3) aus einer Gummimischung besteht, die Chloropren-Kautschuk enthält.

2. Ventilkörper (1) nach Anspruch 1, **dadurch gekennzeichnet, dass** der Anteil an Chloropren-Kautschuk in der Gummimischung des mantelartigen Körpers (3) zwischen 30 phr und 100 phr beträgt.

3. Ventilkörper (1) nach Anspruch 2, **dadurch gekennzeichnet, dass** der Anteil an Chloropren-Kautschuk in der Gummimischung des mantelartigen Körpers (3) mindestens 50 phr, insbesondere mindestens 75 phr, beträgt.

4. Ventilkörper nach einem der Ansprüche 1 bis 3, **dadurch gekennzeichnet, dass** die Gummimischung des mantelartigen Körpers (3) neben Chloropren-Kautschuk zumindest einen der Kautschuke aus der Gruppe der Dienkautschuke, wie Naturkautschuk, Ethylen-Propylen-Dien-Kautschuk, Butadienkautschuk, Isoprenkautschuk und/oder Styrol-Butadien-Kautschuk, enthält.

5. Snap-In-Ventil für ein Fahrzeugrad aus Felge und Fahrzeugluftreifen, dessen Ventilkörper (1) gemäß einem oder mehreren der Ansprüche 1 bis 4 ausgeführt ist.

6. Snap-In-Ventil nach Anspruch 5, **dadurch gekennzeichnet, dass** der Ventilkörper (1) mit einem Elektronikgehäuse verbunden ist.

## Claims

1. Valve body (1) for a snap-in valve of a vehicle wheel, having a valve body (1) with a valve stem with valve core (2) and having a jacketlike body (3) connected fixedly to the valve stem with valve core (2), said body (3) comprising a rubber mixture,
**characterized**
**in that** the jacketlike body (3) consists of a rubber mixture which comprises chloroprene rubber.

2. Valve body (1) according to Claim 1, **characterized in that** the fraction of chloroprene rubber in the rubber mixture of the jacketlike body (3) is between 30 phr and 100 phr.

3. Valve body (1) according to Claim 2, **characterized in that** the fraction of chloroprene rubber in the rubber mixture of the jacketlike body (3) is at least 50 phr, in particular at least 75 phr.

4. Valve body according to any of Claims 1 to 3, **characterized in that** the rubber mixture of the jacketlike body (3) comprises not only chloroprene rubber but also at least one of the rubbers from the group of the diene rubbers, such as natural rubber, ethylene-propylene-diene rubber, butadiene rubber, isoprene rubber and/or styrenebutadiene rubber.

5. Snap-in valve for a vehicle wheel composed of rim and pneumatic vehicle tire, the valve body (1) of said valve being designed in accordance with one or more of Claims 1 to 4.

6. Snap-in valve according to Claim 5, **characterized in that** the valve body (1) is connected to an electronics housing.

## Revendications

1. Corps de valve (1) pour une valve snap-in d'une roue de véhicule comprenant un corps de valve (1) avec une tige de valve avec un insert de valve (2) et un corps en forme d'enveloppe (3) constitué d'un mélange de caoutchouc, connecté fixement à la tige de valve avec l'insert de valve (2),
**caractérisé en ce que**
le corps en forme d'enveloppe (3) se compose d'un mélange de caoutchouc qui contient du caoutchouc chloroprène.

2. Corps de valve (1) selon la revendication 1, **caractérisé en ce que** la proportion de caoutchouc chloroprène dans le mélange de caoutchouc du corps en forme d'enveloppe (3) est comprise entre 30 phr et 100 phr.

3. Corps de valve (1) selon la revendication 2, **caractérisé en ce que** la proportion de caoutchouc chloroprène dans le mélange de caoutchouc du corps en forme d'enveloppe (3) est d'au moins 50 phr, en particulier d'au moins 75 phr.

4. Corps de valve selon l'une quelconque des revendications 1 à 3, **caractérisé en ce que** le mélange de caoutchouc du corps en forme d'enveloppe (3) contient, en plus du caoutchouc chloroprène, au moins l'un des caoutchoucs parmi le groupe des caoutchoucs diène, comme le caoutchouc naturel, le caoutchouc éthylène-propylène-diène, le caoutchouc butadiène, le caoutchouc isoprène et/ou le caoutchouc styrène-butadiène.

5. Valve snap-in pour une roue de véhicule constituée d'une jante et du pneumatique de véhicule, dont le corps de valve (1) est réalisé selon l'une quelconque ou plusieurs des revendications 1 à 4.

6. Valve snap-in selon la revendication 5, **caractérisée en ce que** le corps de valve (1) est connecté à un boîtier électronique.
